# EUROPEAN PATENT APPLICATION

(11) **EP 3 770 095 A1**
(43) Date of publication of application: **27.01.2021**
(21) Application number: 19202596.3
(22) Date of filing: 10.10.2019
(51) Int. Cl.: B66B 1/24, B66B 1/34

(54) **METHODS AND SYSTEMS FOR ELEVATOR CROWD PREDICTION**

(30) Priority: 23.07.2019 US 201962877525 P
(71) Applicant: Otis Elevator Company, Farmington, Connecticut 06032 (US)
(72) Inventor: Polak, David R., East Hartford, CT 06108 (US); Pasini, Jose Miguel, East Hartford, CT 06108 (US); Rucco, Matteo, Trento, 38121 (IT); Tonelli, Cecilia, 00185 Roma (IT); De Antoni, Andrea, 00185 Roma (IT); Gentile, Giacomo, 00185 Roma (IT); Nichols, Stephan Richard, Farmington, CT 06032 (US)
(74) Representative: Dehns

(57) **Abstract**

A method for crowd prediction in an elevator system comprises: logging (100) the number of calls across a period of time and generating a first time series (106) for an average number of calls; collecting external influence data (120) and generating a second time series (122) for the external influence data; and performing a cross-correlation test (124) on the first and second time series. When a cross-correlation between the first and second time series is determined, a causality test (126) is performed on the first and second time series. When a causal relationship between the first and second time series is determined, the causal relationship is used to predict an expected number of calls in the elevator system (128).

## Description

### Background

The present disclosure relates to systems and methods for crowd prediction in an elevator system, in particular for monitoring and predicting elevator car occupancy levels for the purposes of crowd detection.

It is known to track passengers in an elevator system using depth sensors, video cameras and other sensors. Real time passenger data can be used by a dispatch controller to intelligently assign an elevator car to an individual or group of passengers. However, if the current occupancy level of the elevator car does not allow the passenger(s) to board, i.e. a crowded car, then the waiting passenger(s) experience frustration. Any unnecessary elevator stops increase the travel time for those passengers already on board, increase the waiting time for the passenger(s) not able to board, and represent a cost in terms of energy waste and equipment wear.

There remains a need to accurately predict an expected number of calls and an expected car occupancy level in an elevator system.

### Summary

According to the present disclosure, there is provided a method for crowd prediction in an elevator system, the method comprising:
logging the number of calls across a period of time and generating a first time series for an average number of calls;
collecting external influence data and generating a second time series for the external influence data;
performing a cross-correlation test on the first and second time series;
when a cross-correlation between the first and second time series is determined, performing a causality test on the first and second time series; and
when a causal relationship between the first and second time series is determined, using the causal relationship to predict an expected number of calls in the elevator system.

In such methods, prediction of the expected number of calls in the elevator system is based on the effect of external influences rather than merely based on the average number of calls in the past. This provides for more accurate crowd prediction. For example, it has been appreciated that various external influences can impact the passenger traffic in a given elevator system and change the traffic patterns usually expected from the number of calls logged in the past.

In the disclosed method, both correlation and causality tests must be satisfied before predicting an expected number of calls based on the causal relationship between the first and second time series. This ensures that external influence data is only taken into account at times when the external influence is in fact having an effect on passenger traffic patterns in the elevator system.

In at least some examples, the external influence data relates to one or more of: weather, epidemics, holidays, special events, urban transportation systems, and road traffic. The external influence data is preferably local to the elevator system. For instance, it has been appreciated that on hot days there is a tendency for office workers to arrive at a commercial building earlier or later than usual, while the volume of passenger traffic may be reduced in a residential building. In another example, local traffic problems or urban transportation delays may result in passengers arriving later and more spread out. Special events, such as a protest march, may be taken into account when the cross-correlation and causality tests reveal that the external influence is causing a shift in the usual passenger traffic pattern expected from calls logged in the past.

It has further been appreciated that, when taking into account external influence data, it may be beneficial to check whether the external influence data is stationary or non-stationary. In at least some cases, the external influence data may show trends, for example a seasonal trend or even a daily or hourly trend, which is ideally taken into consideration as otherwise forecasting performance based on the external influence data will depend on the time when the external influence data is collected. Thus, in at least some examples, the method further comprises: performing a stationary test on the external influence data. In some further examples, when the stationary test shows that the external influence data has a trend, the method further comprises de-trending the external influence data before generating the second time series.

The methods disclosed herein may log the number of calls in a given elevator system using any conventional technique, for example counting calls input at one or more of: call buttons, kiosks, user devices. The step of logging the number of calls across a period of time may comprise calculating a cumulative number of calls per time interval across the period of time. In at least some examples, the time interval may be between 1 minute and one hour. For example, the time interval may be 10 minutes. The period of time is preferably much longer than the time interval. In at least some examples, the period of time is at least one day, at least one week, or at least one month. This means that the first time series for the average number of calls provides a more accurate picture of passenger habits and how they vary day to day, week to week, and even from season to season.

In order to more accurately provide for crowd prediction in an elevator system, it has been appreciated that car occupancy levels should be taken into consideration. In some elevator systems, for example in a commercial building having a security system so that each passenger is identified and admitted to the elevator system, the expected car occupancy level may have close to a 1:1 correspondence with the expected number of calls, i.e. one passenger per call. Even so, a car occupancy level relates not only to the number of passengers but also to the volume associated with those passengers. If a passenger has an associated object (such as a pet, wheelchair, luggage, etc.) then occupancy volume is increased. It is preferable to convert the expected number of calls into an expected car occupancy level.

In accordance with one or more examples, in addition or alternatively, the method further comprises: using the expected number of calls to predict an expected car occupancy level. In some elevator systems, there may be a constant factor that can be applied to predict an expected car occupancy level based on the expected number of calls. For example, in an office building, it may be known that few passengers have any associated objects and a constant conversion factor may be applied. In another environment, such as an airport, there may be a large variance e.g. some calls relate to a single passenger with one bag, while other calls relate to a family group with a large luggage trolley and pushchair. Differences in passenger habits, that may have an impact on the expected car occupancy level, may also be identified at different times of the day, week, month or year.

In accordance with one or more examples, the method further comprises: monitoring individual passenger journeys across a period of time; and implementing a machine learning process to identify passenger habits and further predict the expected car occupancy level. Preferably the step of monitoring individual passenger journeys includes determining an individual passenger's occupancy volume. This may include determining an associated object volume. An associated object may be any object carried by or transported with a passenger, for example one or more of: a wheelchair, a stretcher, a pet, a child, a trolley, luggage, etc.

It will be understood that the machine learning process may be any suitable form of artificial intelligence that uses algorithms to detect passenger habits and predict passenger flow in the elevator system. In at least some examples, the machine learning process may include deep learning or artificial neural networks. In at least some examples, the machine learning process may include Bayesian networks or genetic algorithms.

In accordance with one or more examples, monitoring individual passenger journeys comprises: collecting passenger journey data using at least one of a sensor in a hallway and a sensor in car; and applying a time stamp to the passenger journey data.

In accordance with one or more examples, in addition or alternatively, the hallway sensor may comprise any motion or depth sensor. For example, the hallway sensor may include one or more of: a video camera, thermal sensor, infrared sensor, laser sensor, pressure sensor or radar sensor. In at least some examples, the hallway sensor comprises a depth sensor. In at least some examples, the hallway sensor comprises at least one depth sensor and at least one video camera. In at least some examples, the hallway sensor comprises any combination of the above-mentioned sensors or other sensors known in the art. The hallway sensor may use computer vision algorithms to detect passengers and any associated objects. The hallway sensor may also determine the individual passenger's occupancy volume, or a separate sensor may be used for this purpose (e.g. a load sensor).

It should be appreciated that the term "depth sensor" is used throughout this disclosure for any 1 D, 2D, or 3D depth sensor, or combination thereof. Such a sensor can be operable in the electromagnetic or acoustic spectrum capable of producing a depth map (also known as a point cloud or occupancy grid) of the corresponding dimension(s). A depth sensor may comprise one or more of: a structured light measurement, phase shift measurement, time of flight measurement, stereo triangulation device, sheet of light triangulation device, light field camera, coded aperture camera, simultaneous localization and mapping (SLAM), imaging radar, imaging sonar, scanning LIDAR, flash LIDAR, Passive Infrared (PIR) sensor, small Focal Plane Array (FPA), or any combination thereof.

Notably, there can be qualitative and quantitative differences between 2D imaging sensors, e.g., conventional video cameras, and 1D, 2D, or 3D depth sensing sensors to the extent that a depth sensor provides numerous advantages. In 2D imaging, the reflected color (mixture of wavelengths) from the first object in each radial direction from the imager is captured. The 2D image, then, is the combined spectrum of the source illumination and the spectral reflectivity of objects in the scene. A 2D image can be interpreted by a person as a picture. In 1D, 2D, or 3D depth-sensing sensors, there is no color (spectral) information; rather, the distance (depth, range) to the first reflective object in a radial direction (1D) or directions (2D, 3D) from the sensor is captured. 1D, 2D, and 3D technologies may have inherent maximum detectable range limits and can be of relatively lower spatial resolution than typical 2D imagers. The use of 1D, 2D, or 3D depth sensing can advantageously provide improved operations compared to conventional 2D imaging in their relative immunity to ambient lighting problems, better separation of occluding objects, and better privacy protection.

In accordance with one or more examples, the passenger journey data may include one or more of: a boarding floor, an intended destination floor (e.g. as entered by a call input device), a deboarding floor, a passenger identification, and occupancy volume.

In at least some examples, the hallway sensor may be able to identify individual passengers, for example using object classification algorithms. Thus passengers may not be required to identify themselves using an identification badge. This can protect passenger anonymity. However, in at least some elevator systems a security system may be present and passenger tracking may include passenger recognition. In accordance with one or more examples, in addition or alternatively, monitoring individual passenger journeys may comprise: recognising an individual passenger's identity. Examples may include one or more of: ID badge recognition (e.g. RFID card reader, Bluetooth beacon), mobile device (e.g. smartphone, smart watch, tablet, etc.), fingerprint or iris recognition, facial recognition, etc. One or more suitable sensors may be provided for the purposes of recognising an individual passenger's identity.

Regardless of whether an individual passenger is identified by the hallway sensor or by a separate process of passenger identity recognition, it is desirable to monitor whether a passenger seen approaching the elevator car does actually board that elevator car. Some passengers may take an alternative route or hang back in the hallway. This helps to provide a true passenger count when determining the available car occupancy level. In accordance with one or more examples, in addition or alternatively, monitoring individual passenger journeys comprises: using a hallway sensor to identify an individual passenger and using a car sensor to re-identify the same individual passenger. The car sensor may comprise any motion or depth sensor. For example, the car sensor may include one or more of: a video camera, thermal sensor, infrared sensor, laser sensor, pressure sensor or radar sensor. In at least some examples, the car sensor comprises a video camera. In at least some examples, the car sensor comprises at least one depth sensor and at least one video camera. The car sensor may use object classification algorithms to re-identify an individual passenger.

In accordance with one or more examples, in addition or alternatively, the monitoring process may further include: using a sensor to monitor the individual passenger's interaction with a call input device. This may be the same sensor as the hallway sensor or a different sensor. The call input device may be a mobile device carried by the user or a fixed device such as a kiosk or hall call panel. By monitoring the individual passenger's interaction with a call input device, the real time passenger data may include information about a passenger's intended destination.

In accordance with one or more examples, in addition or alternatively, the monitoring process may further include: using the car sensor to monitor a destination floor where the individual passenger deboards the elevator car. This is helpful for updating the real time passenger data, as a passenger may not deboard at the intended destination or expected destination.

It will be appreciated that many of the examples disclosed above combine real time tracking of individual passengers with an ongoing machine learning process so that passenger habits can be identified and a better prediction made for the expected car occupancy level. This represents a refinement in addition to the initial calculations that take into account the effect of external influences. This means that a dispatch controller in the elevator system may be more accurately notified when an elevator car is too crowded to respond to a passenger call and unnecessary stops can be avoided, improving passenger experience.

In addition to any of the examples disclosed herein, or as an alternative, the method may further comprise: comparing the expected car occupancy level to an available car occupancy level; and issuing a crowd notification when the expected car occupancy level exceeds the available car occupancy level. Furthermore, in at least some examples, the method further comprises: controlling dispatch and/or stopping of at least one car in the elevator system in response to the crowd notification. This may include, for example, redirecting an incoming call to another elevator car, and/or avoid stopping an elevator car, when the expected car occupancy level exceeds the available car occupancy level.

According to the present disclosure there is further provided an elevator system, elevator system comprising: a monitoring system arranged to log the number of calls across a period of time and generate a first time series for an average number of calls; a processor arranged to: receive external influence data and generate a second time series for the external influence data; perform a cross-correlation test on the first and second time series; when a cross-correlation between the first and second time series is determined, perform a causality test on the first and second time series; and when a causal relationship between the first and second time series is determined, use the causal relationship to predict an expected number of calls in the elevator system.

In accordance with one or more examples, in addition or alternatively, the monitoring system is arranged to: monitor individual passenger journeys across a period of time. For example, the monitoring system may be arranged to collect passenger journey data using at least one of a sensor in a hallway and a sensor in a car; and apply a time stamp to the passenger journey data. This may be carried out according to any of the exemplary methods already described above. In at least some examples, the monitoring system may be arranged to implement a machine learning process to identify passenger habits and predict an expected car occupancy level. Again, this may be carried out according to any of the exemplary methods already described above.

In accordance with one or more examples, in addition or alternatively, the elevator system further comprises a crowd detection system arranged to: compare the expected car occupancy level to an available car occupancy level; and issue a crowd notification when the expected car occupancy level exceeds the available car occupancy level.

In accordance with one or more examples, in addition or alternatively, the elevator system further comprises an elevator dispatch controller arranged to:
redirect an incoming call to another elevator car when the expected car occupancy level exceeds the available car occupancy level; and/or
avoid stopping an elevator car when the expected car occupancy level exceeds the available car occupancy level.

### Detailed description

Some examples of this disclosure will now be described, by way of illustration only, and with reference to the accompanying drawings, in which:
Figure 1 is a schematic overview of a process for logging the number of calls and generating an associated time series in an elevator system according to an example of the present disclosure;
Figure 2 is a schematic overview of a method for crowd prediction in an elevator system according to an example of the present disclosure;
Figure 3 is a schematic overview of an elevator system according to an example of the present disclosure;
Figure 4 is a schematic overview of a method for crowd prediction in an elevator system according to an example of the present disclosure; and
Figure 5 is a schematic overview of a machine learning process in a monitoring system according to an example of the present disclosure.

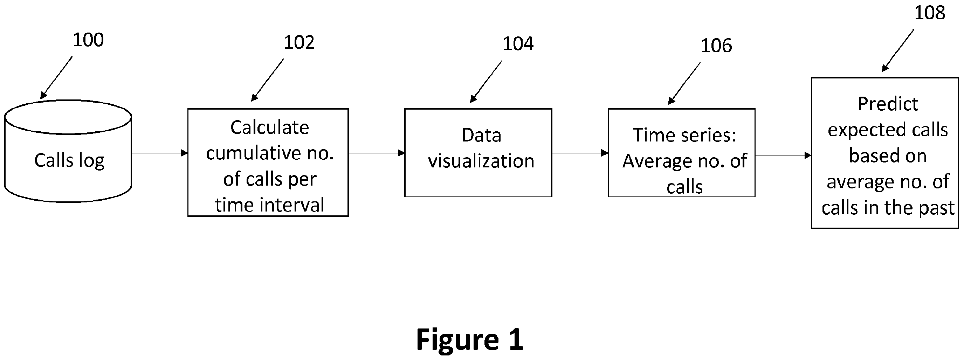

As is generally known in the art, and seen in Figure 1, a data source 100 relating to calls logged in an elevator system may be used as follows. At step 102, the cumulative number of calls per time interval (e.g. 10 minutes) is calculated. At step 104, the data are visualized e.g. using appropriate statistical tools as is well known in the art. At step 106, a time series is generated for the average number of calls. The calls log 100 represents a recording of past events, e.g. floor departure/destination and associated timestamps. The time series generated at step 106 may be used to predict an expected number of calls, at step 108, based on the average number of calls in the past.

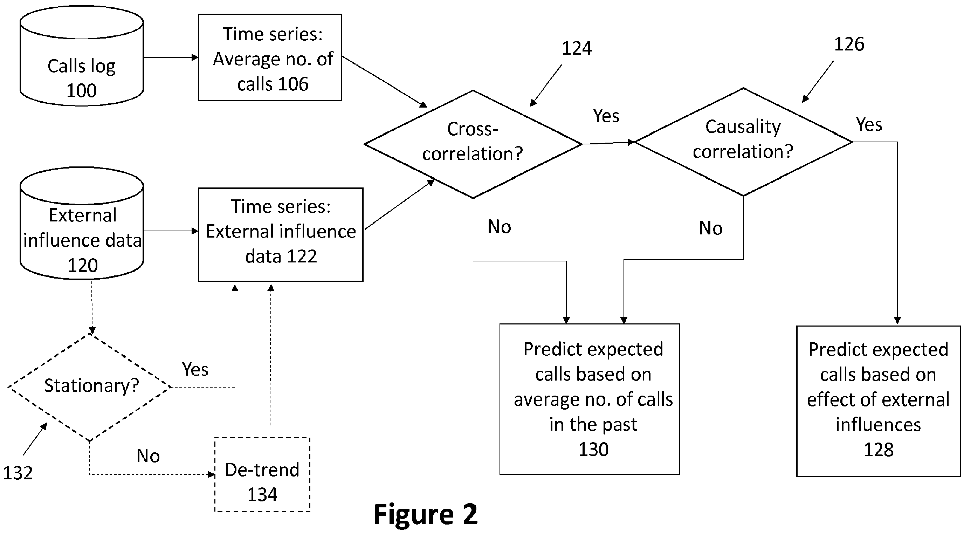

Figure 2 provides an overview of an exemplary method for crowd prediction in an elevator system. As already seen in Figure 1, a calls log 100 may be used to generate a first time series for the average number of calls 106. According to examples of the present disclosure, a data source 120 relating to external influences is also connected to the elevator system. At step 122, a second time series is generated for the external influence data. As is shown in dotted outline, the external influence data 120 optionally undergoes a stationary test 132 and de-trending 134.

As is further seen from Figure 2, a cross-correlation test 124 is performed on the first and second time series. When a cross-correlation between the first and second time series is determined, a causality test 126 is then performed on the first and second time series. If the outcome of both the cross-correlation test 124 and the causality test 126 is positive, i.e. when a causal relationship between the first and second time series is determined, the causal relationship is used to predict an expected number of calls in the elevator system at step 128. This prediction of the expected number of calls is based on the effect of external influences. On the other hand, if the outcome of either the cross-correlation test 124 or the causality test 126 is negative, then the expected number of calls is predicted based on the average number of calls in the past, as seen at step 130, and this may be the same outcome as seen at step 108 in Figure 1.

As will be described further below, the prediction of expected calls from steps 128,130 may be converted to an expected car occupancy level and compared with an available car occupancy level. The result of this comparison can be used to inform car dispatching in an elevator system.

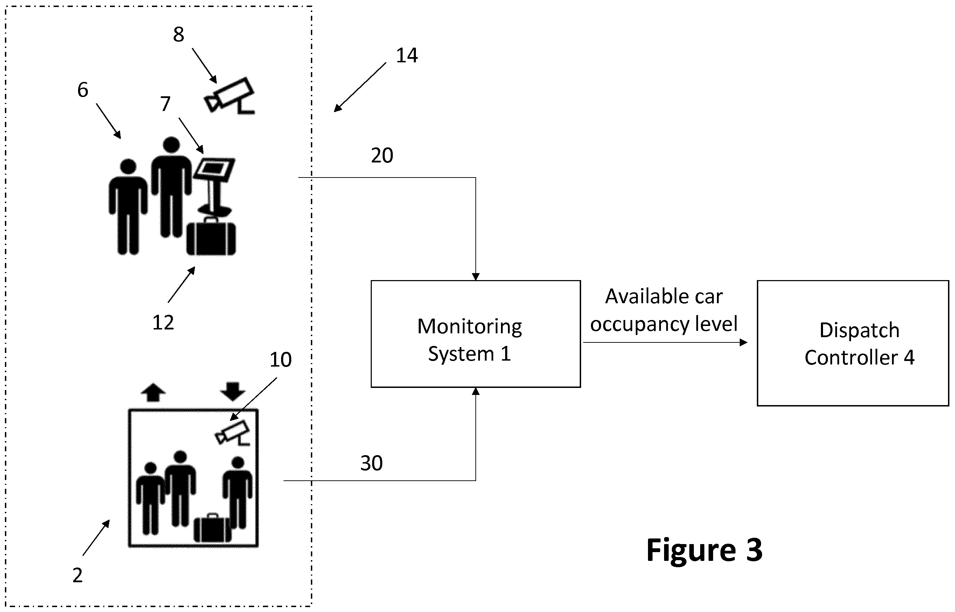

Figure 3 shows in general how a monitoring system 1 collects data 20 from a hallway sensor 8 and data 30 from a car sensor 10. In this example, the monitoring system 1 is in an elevator system that comprises a plurality of elevator cars, such as the car 2, controlled by a dispatch controller 4. The monitoring system 1 is able to track an individual passenger 6, and output real time passenger data, using multiple sensors. The hallway sensor 8 is arranged to monitor the individual passenger's approach to an elevator car. The car sensor 10 is arranged to monitor the individual passenger 6 inside the elevator car 2. In this example, the hallway sensor 8 also acts as a passenger volume sensor arranged to determine the individual passenger's occupancy volume. The hallway sensor 8, such as a video camera and/or depth sensor, may utilise object detection algorithms to recognise a suitcase 12 associated with the passenger 6. The individual passenger's occupancy volume includes the size of the passenger 6 and the size of the suitcase 12.

In this example, the monitoring system 1 is arranged to recognise the identity of the passenger 6. At least one hallway sensor 8 is arranged to monitor the passenger's interaction with a call input device 7, depicted here as a kiosk. This interaction may be used to identify the passenger 6, for example if the passenger presents an identity card to input an elevator call. From information received from the hallway sensor 8, the monitoring system 1 starts to build up real time passenger data including one or more of: an elevator call request, a boarding floor, an intended destination (e.g. as entered at the call input device 7), a passenger identification, and occupancy volume.

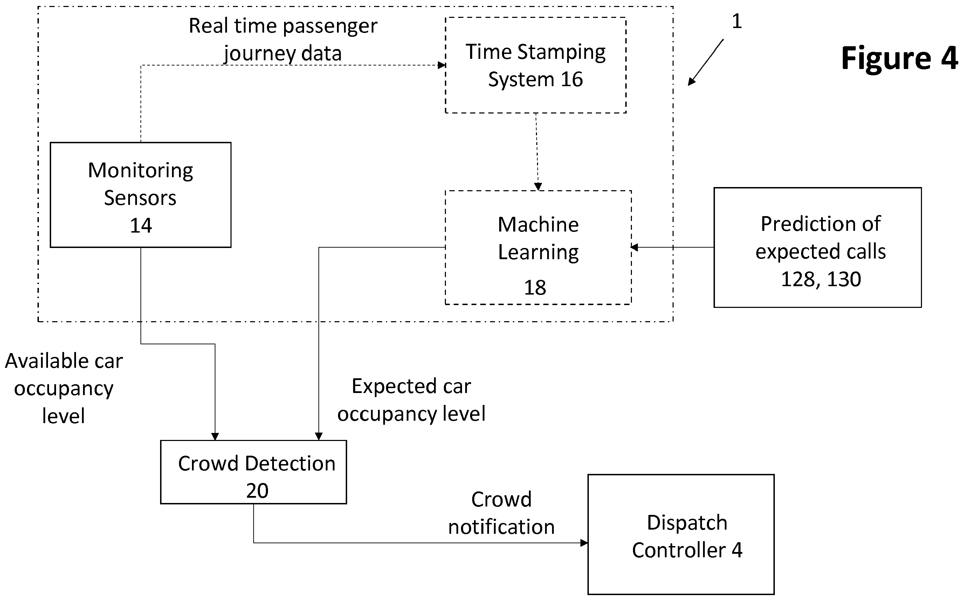

The monitoring system 1 includes a processor that is configured to calculate an available car occupancy level based on the real time data 20, 30. Turning to Figure 4, there is seen an example wherein the monitoring system 1 is used to provide a refinement to the prediction of expected calls from steps 128,130 (in Figure 2). The monitoring sensors 14, as already described in relation to Figure 3, provide real time passenger journey data to a time stamping system 16. In the monitoring system 1 there is a processor 18 arranged to implement a machine learning process. The processor 18 is able to build up a picture of the whole elevator system's traffic pattern over a period of time of days, weeks or even months. The processor 18 may be at least partly combined with a processor relating to the monitoring sensors 14 of the monitoring system 1, or implemented as a physically separate processor, or the processor 18 may be implemented in the cloud. The processor 18 is arranged to determine an expected car occupancy level.

As is further seen in Figure 4, the expected car occupancy level is compared with the available car occupancy level determined by the monitoring system 1. This comparison may be carried out by a crowd detection processor 20 that is separate to, or combined with, the processor 18 in the monitoring system 1. A crowd notification is then sent to the dispatch controller 4 when the expected car occupancy level exceeds the available car occupancy level.

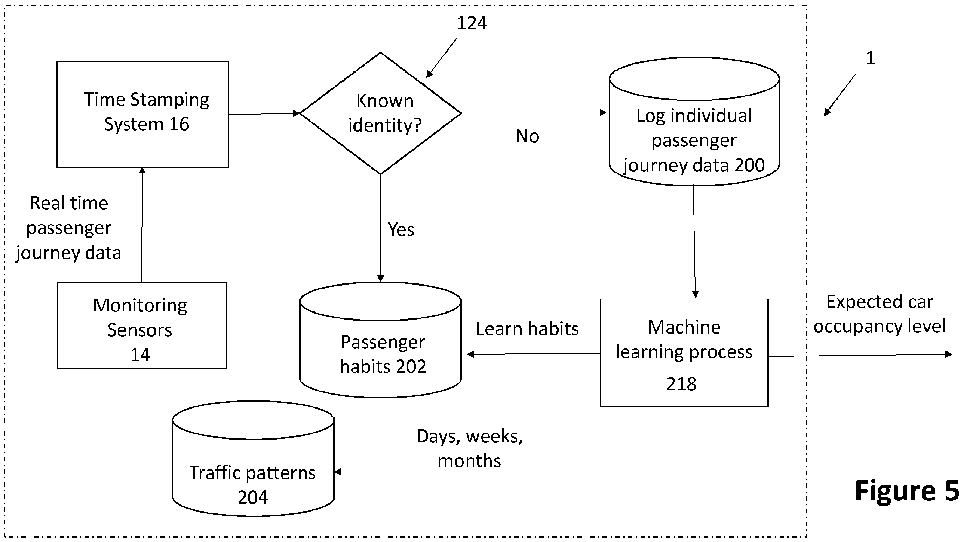

With reference to Figure 5, it is further disclosed how the monitoring system 1 may be used to learn passenger habits and build up a traffic pattern for the elevator system. In this example, an identity test 124 is performed on the real time passenger journey data. If an individual passenger is identified by the monitoring system 1, the machine learning process 218 can immediately start to learn passenger habits for each identified passenger. If an individual passenger is not identified by the monitoring system 1, the real time passenger journey data is still logged at 200 and fed into the machine learning process 218 and, over time, this enables the machine learning process 218 to identify repeats or trends in individual passenger journey data so that passenger habits are learnt. The passenger habits are stored at 202. Furthermore, the machine learning process 218 integrates individual passenger journey data received over the course of many hours, days, weeks or months to build up traffic patterns 204 that is specific to the elevator system. The machine learning process 218 can use the passenger habits 202 and traffic patterns 204 to more accurately determine the expected car occupancy level at any given moment in time. The expected car occupancy level may be refined in this way before undergoing the crowd detection comparison 20 seen in Figure 4.

It will be appreciated by those skilled in the art that the disclosure has been illustrated by describing one or more specific examples thereof, but is not limited to these aspects; many variations and modifications are possible, within the scope of the accompanying claims.

## Claims

1. A method for crowd prediction in an elevator system, the method comprising:
logging the number of calls across a period of time and generating a first time series for an average number of calls;
collecting external influence data and generating a second time series for the external influence data;
performing a cross-correlation test on the first and second time series;
when a cross-correlation between the first and second time series is determined, performing a causality test on the first and second time series; and
when a causal relationship between the first and second time series is determined, using the causal relationship to predict an expected number of calls in the elevator system.

2. The method of claim 1, wherein the external influence data relates to one or more of: weather, epidemics, holidays, special events, urban transportation systems, and road traffic.

3. The method of claim 1 or 2, further comprising:
performing a stationary test on the external influence data; and
when the stationary test shows that the external influence data has a trend, de-trending the external influence data before generating the second time series.

4. The method of any preceding claim, further comprising:
using the expected number of calls to predict an expected car occupancy level.

5. The method of claim 4, wherein predicting an expected car occupancy level further comprises:
monitoring individual passenger journeys across a period of time; and
implementing a machine learning process to identify passenger habits and further predict the expected car occupancy level.

6. The method of claim 5, wherein monitoring individual passenger journeys comprises:
collecting passenger journey data using at least one of a sensor in a hallway and a sensor in car; and
applying a time stamp to the passenger journey data.

7. The method of claim 6, wherein the passenger journey data includes one or more of: a boarding floor, an intended destination floor, a deboarding floor, a passenger identification, and occupancy volume.

8. The method of any of claims 5-7, wherein monitoring individual passenger journeys comprises:
recognising an individual passenger's identity.

9. The method of any of claims 5-8, wherein monitoring individual passenger journeys comprises: using a hallway sensor to identify an individual passenger and using a car sensor to re-identify the same individual passenger.

10. The method of any preceding claim, further comprising:
comparing the expected car occupancy level to an available car occupancy level; and
issuing a crowd notification when the expected car occupancy level exceeds the available car occupancy level.

11. The method of claim 10, further comprising:
controlling dispatch and/or stopping of at least one car in the elevator system in response to the crowd notification.

12. An elevator system comprising:
a monitoring system arranged to log the number of calls across a period of time and generate a first time series for an average number of calls;
a processor arranged to:
receive external influence data and generate a second time series for the external influence data;
perform a cross-correlation test on the first and second time series;
when a cross-correlation between the first and second time series is determined, perform a causality test on the first and second time series; and
when a causal relationship between the first and second time series is determined, use the causal relationship to predict an expected number of calls in the elevator system.

13. The elevator system of claim 12, wherein the monitoring system is arranged to:
monitor individual passenger journeys across a period of time; and
implement a machine learning process to identify passenger habits and predict an expected car occupancy level.

14. The elevator system of claim 12 or 13, further comprising a crowd detection system arranged to:
compare the expected car occupancy level to an available car occupancy level; and
issue a crowd notification when the expected car occupancy level exceeds the available car occupancy level.

15. The elevator system of claim 12, 13 or 14, further comprising an elevator dispatch controller arranged to:
redirect an incoming call to another elevator car when the expected car occupancy level exceeds the available car occupancy level; and/or
avoid stopping an elevator car when the expected car occupancy level exceeds the available car occupancy level.
